(19) Europäisches Patentamt / European Patent Office / Office européen des brevets

(11) **EP 2 944 837 B1**

(12) **EUROPEAN PATENT SPECIFICATION**

(45) Date of publication and mention
of the grant of the patent:
**25.07.2018 Bulletin 2018/30**

(21) Application number: **14738290.7**

(22) Date of filing: **08.01.2014**

(51) Int Cl.:
*F16C 33/58* (2006.01)     *B60B 35/02* (2006.01)
*B60B 35/18* (2006.01)     *F16C 19/18* (2006.01)
*F16C 33/32* (2006.01)     *F16C 35/073* (2006.01)

(86) International application number:
**PCT/JP2014/050144**

(87) International publication number:
**WO 2014/109331 (17.07.2014 Gazette 2014/29)**

(54) **BEARING DEVICE FOR WHEEL**

RADLAGERVORRICHTUNG

DISPOSITIF DE PALIER POUR ROUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.01.2013 JP 2013001666**

(43) Date of publication of application:
**18.11.2015 Bulletin 2015/47**

(73) Proprietor: **NTN Corporation
Osaka-shi, Osaka 550-0003 (JP)**

(72) Inventor: **KOMORI, Kazuo
Iwata-shi
Shizuoka 438-8510 (JP)**

(74) Representative: **Cohausz & Florack
Patent- & Rechtsanwälte
Partnerschaftsgesellschaft mbB
Bleichstraße 14
40211 Düsseldorf (DE)**

(56) References cited:
**WO-A1-2008/047472     JP-A- 2006 052 752
JP-A- 2006 052 752     JP-A- 2010 042 785
JP-A- 2010 042 785     JP-A- 2011 140 302
JP-A- 2011 140 302     US-A1- 2009 116 779
US-A1- 2012 230 621**

## Description

Field of the invention

The present invention generally relates to a wheel bearing apparatus which can rotationally support a wheel of a vehicle, and more particularly to a wheel bearing apparatus of the self-retaining structure in which an inner ring is secured on a hub wheel by the swing caulking of the hub wheel and intended to suppress the hoop stress caused on the inner ring by the caulking process and to reduce the bearing friction.

Description of Background Art

US 2009/116779 A1 discloses bearing apparatus for wheels of vehicle which includes double-row tapered rollers having inner side tapered rollers whose pitch circle diameter is lesser than that of outer side tapered rollers.

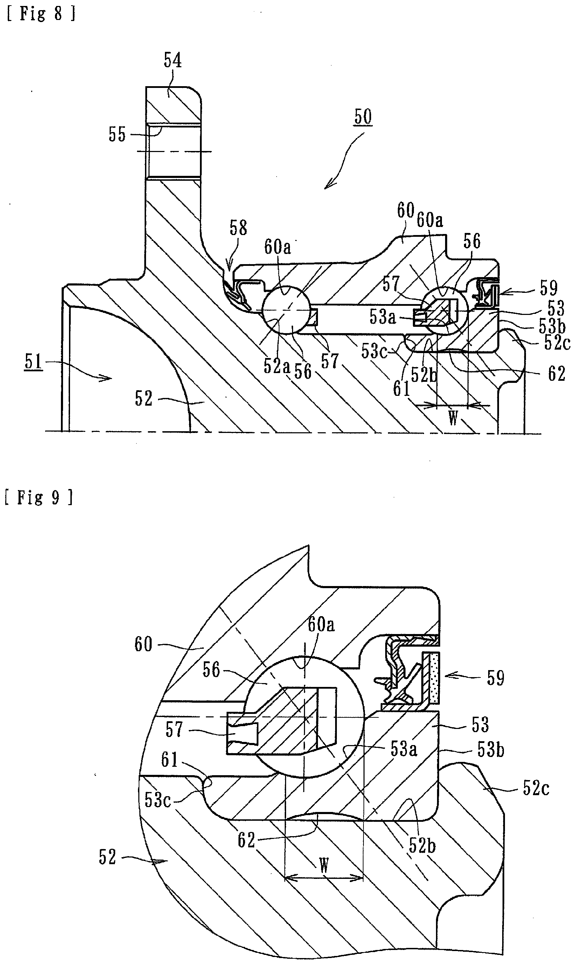

There are two kinds of the wheel bearing apparatus of vehicles such as automobiles used for driving wheels and driven wheels. Especially in the wheel bearing apparatus for rotationally supporting wheels relative to a suspension apparatus of the automobile, it has been developed reduction of manufacturing cost, weight and size of the wheel bearing apparatus. It is shown in Fig. 8 one representative example of a wheel bearing apparatus for a driven wheel of the prior art.

The wheel bearing apparatus 50 is a third generation type used for a driven wheel and comprises an inner member 51, an outer member 60, and a plurality of balls 56, 56 contained between the inner member 51 and the outer member 60. The inner member 51 comprises a hub wheel 52 and an inner ring 53 press-fitted onto the hub wheel 52.

The hub wheel 52 is integrally formed with a wheel mounting flange 54 for mounting a wheel (not shown) on one end thereof and bolt apertures 55 are formed in the wheel mounting flange 54 for receiving hub bolts (not shown) equidistantly along its periphery. The hub wheel 52 is integrally formed on its outer circumference with one inner raceway surface 52a and has a cylindrical portion 52b axially extending from the inner raceway surface 52a through a stepped portion 61. The inner ring 53 is press-fitted onto the cylindrical portion 52b which is formed on its outer circumference with the other inner raceway surface 53a.

A caulking portion 52c is formed by plastically deforming the end of the cylindrical portion 52b radially outward with a smaller end surface 53c of the inner ring 53 being abutted against the stepped portion 61. That is, the inner ring 53 is secured relative to the hub wheel 52 with sandwiching the inner ring 53 between the caulking portion 52c and the stepped portion 61 of the hub wheel 52. Since the caulking portion 52c is plastically deformed with being closely contacted against the larger end surface 53b of the inner ring 53, it is possible to surely keep a desired axial force for pressing the inner ring 53 against the stepped portion 61 of the hub wheel 52.

The outer member 60 has, on its outer circumference, an integrally formed body mounting flange (not shown) and is formed on its inner circumference, with double row outer raceway surfaces 60a, 60a. The double row balls 56, 56 are contained in a space formed between the outer raceway surfaces 60a, 60a and the inner raceway surfaces 52a, 53a and rollably held by cages 57, 57. Seals 58, 59 are mounted on the ends of the outer member 60 to prevent leakage of lubricant grease sealed within the bearing as well as entering of rain water or dusts into the bearing from the outside.

The hub wheel 52 is made of medium-high carbon steel such as S53C including carbon of 0.40-0.80% by weight and is hardened by high frequency induction hardening as having a surface hardness of 58-64 HRC over a region including the inner raceway surface 52a, a seal land with which the seal 58 is contacted, and the cylindrical portion 52b. The caulking portion 52c is not hardened and kept as having the surface hardness less than 25 HRC after forging. The inner ring 53 is formed of high carbon chrome steel such as SUJ2 and dipping hardened to their cores as having hardness of 58-64 HRC.

Similarly to the hub wheel 52, the outer member 60 is formed of medium-high carbon steel such as S53C including carbon of 0.40-0.80% by weight and is formed with double row outer raceway surfaces 60a, 60a hardened by high frequency induction hardening as having a surface hardness of 58-64 HRC.

As shown in an enlarged view of Fig. 9, an annular recessed portion 62 is formed on the inner circumference of the inner ring 53. The recessed portion 62 is formed in substantially whole range of an axial width of the inner raceway surface 53a of the inner ring 53. The recessed portion 62 has a circular-arc shaped longitudinal section having a largest depth at its axially center position.

The provision of the recessed portion 62 on the inner circumference of the inner ring 53 makes it possible to relieve the radially expanding force caused during the press-fitting process of the inner ring 53 onto the hub wheel 52 from being applied to the inner raceway surface 53a on the outer circumference of the inner ring 53 and thus to suppress increase of the hoop stress caused on the inner raceway surface 53a of the inner ring 53. In addition, the recessed portion 62 can also relieve increase of the hoop stress caused on the inner raceway surface 53a of the inner ring 53 by caulking the caulking portion 52c. Accordingly, it is possible to suppress increase of the hoop stress caused on the inner raceway surface 53a during the press-fitting process of the hub wheel 52 onto the cylindrical portion 52b without increase of the radial dimension and width dimension of the inner ring 53 (see Patent Document 1 below).

Documents of Prior Art

Patent Document

Patent Document 1: JP 2008-19899 A

Disclosure of the invention

Problems to be solved by the invention

Although the wheel bearing apparatus 50 of the prior art can suppress the hoop stress caused on the inner raceway surface 53a of the inner ring 53 by press-fitting the inner ring 53 onto the hub wheel 52 and caulking the caulking portion 52c, it has been recently required a wheel bearing apparatus of caulking type that it should be improved in the durability of the inner ring 53 by suppressing the hoop stress and in reduction of the friction of the bearing in addition to reduction of the weight and size in order to improve the fuel consumption.

It has been considered that it is effective for reducing friction of the bearing to reduce the bearing clearance after caulking, more particularly to reduce the negative clearance range. It is important to examine bearing specifications in which both the suppression of the hoop stress and the reduction of friction are considered.

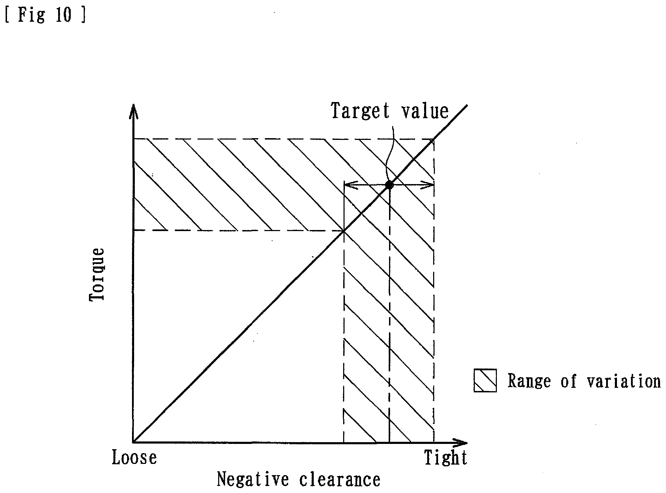

It is known that there is a relation between the bearing friction and the bearing clearance after caulking schematically shown in Fig. 10. That is, it is considered that reduction of the friction can be realized by suppressing variation of the negative clearance in which the clearance after caulking is hard since a hatched portion can be suppressed.

It is therefore an object of the present invention to provide a wheel bearing apparatus which can suppress the hoop stress of the inner ring caused by the caulking process and reduce the bearing friction with suppressing the clearance range after caulking.

Means for solving problems

For achieving the objects mentioned above, there is provided, according to the present invention of claim 1, a wheel bearing apparatus comprising an outer member integrally formed on its outer circumference with a body mounting flange and on its inner circumference with double row outer raceway surfaces; an inner member including a hub wheel and an inner ring, the hub wheel being integrally formed on its one end with a wheel mounting flange and on its outer circumference with one inner raceway surface opposing to one of the outer raceway surfaces and having a cylindrical portion axially extending from the inner raceway surface through a stepped portion, the inner ring being formed on its outer circumference respectively with the other inner raceway surface opposing to the other of the double row outer raceway surfaces; double row rolling elements rollably contained between the inner raceway surfaces of the inner member and the outer raceway surfaces of the outer member; and the inner ring being axially immovably secured on the hub wheel by a caulking portion formed by plastically deforming radially outward an end of the cylindrical portion of the hub wheel characterized in that the thickness of a smaller end surface of the inner ring is larger than the height of the stepped portion of the hub wheel; and that the axial position of the smaller end surface of the inner ring is set within an axial range between the axial position of the outermost-side point of the inner-side rolling elements of the double row rolling elements and the axial position of the groove bottom point of the inner raceway surface of the inner ring.

According to the wheel bearing apparatus of the present invention of claim 1 of "third generation" type in which the inner ring is axially immovably secured on the hub wheel by a caulking portion formed by plastically deforming radially outward an end of the cylindrical portion of the hub wheel, since it is characterized in that the thickness of a smaller end surface of the inner ring is larger than the height of the stepped portion of the hub wheel; and that the axial position of the smaller end surface of the inner ring is set within an axial range between the axial position of the outermost-side point of the inner-side rolling elements of the double row rolling elements and the axial position of the groove bottom point of the inner raceway surface of the inner ring, it is possible to provide a wheel bearing apparatus which can reduce the bearing friction by reducing the sensitivity of the elastic deformation of the inner ring during caulking process and by suppressing variation of the negative clearance after caulking.

It is preferable as defined in claim 2 that a value obtained by dividing a dimensionless value of the area of the smaller end surface of the inner ring by a dimensionless value of the inner diameter of the inner ring is set to 11 or more. This makes it possible to suppress both the hoop stress caused by the caulking process and the variation of the bearing clearance after caulking and thus to further reduce the bearing friction.

It is also preferable as defined in claim 3 that a recessed portion is formed on the inner-side end of the hub wheel, the depth of the recessed portion extends to the axial position of the stepped portion of the hub wheel, and the cylindrical portion has a circular cross-section. This makes it possible to reduce weight of the hub wheel and the hoop stress caused on the inner ring with suppressing expansion of the inner ring during the caulking process.

It is preferable as defined in claim 4 that a spacer having a rectangular longitudinal section is disposed on the cylindrical portion of the hub wheel so that the inner ring is secured on the hub wheel with the inner ring and the spacer being sandwiched between the caulking portion and the stepped portion of the hub wheel. This makes it possible to improve the durability of the inner ring with reducing the deformation and therefore hoop stress of the inner ring and to maintain the bearing preload at a proper value.

It is also preferable as defined in claim 5 that the pitch circle diameter of the inner-side rolling elements of the double row rolling elements is larger than the pitch circle diameter of the outer-side rolling elements of the double row rolling elements, the size of each double row rolling element is same, and the number of the inner-side rolling elements is larger than that of the outer-side rolling elements. This makes it possible to increase the bearing rigidity of inner-side portion as compared with the outer-side portion and thus to improve the bearing life, and also possible to prevent reduction of the roundness of the inner raceway surface of the inner ring with suppressing deformation of the inner ring during the caulking process.

Effects of the invention

According to the wheel bearing apparatus of the present invention, since it comprises an outer member integrally formed on its outer circumference with a body mounting flange and on its inner circumference with double row outer raceway surfaces; an inner member including a hub wheel and an inner ring, the hub wheel being integrally formed on its one end with a wheel mounting flange and on its outer circumference with one inner raceway surface opposing to one of the outer raceway surfaces and having a cylindrical portion axially extending from the inner raceway surface through a stepped portion, the inner ring being formed on its outer circumference respectively with the other inner raceway surface opposing to the other of the double row outer raceway surfaces; double row rolling elements rollably contained between the inner raceway surfaces of the inner member and the outer raceway surfaces of the outer member; and the inner ring being axially immovably secured on the hub wheel by a caulking portion formed by plastically deforming radially outward an end of the cylindrical portion of the hub wheel and is characterized in that the thickness of a smaller end surface of the inner ring is larger than the height of the stepped portion of the hub wheel; and that the axial position of the smaller end surface of the inner ring is set within an axial range between the axial position of the outermost-side point of the inner-side rolling elements of the double row rolling elements and the axial position of the groove bottom point of the inner raceway surface of the inner ring, it is possible to provide a wheel bearing apparatus which can reduce the bearing friction by reducing the sensitivity of the elastic deformation of the inner ring during caulking process and by suppressing variation of the negative clearance after caulking.

Brief Description of the Drawings

[Fig.1] A longitudinal-section view of a first embodiment of a wheel bearing apparatus of the present invention;

[Fig. 2] A partially enlarged view of Fig. 1;

[Fig.3] A graph showing a relation between a ratio of an area of a smaller end surface of the inner ring and a push-in amount limitation of the inner ring;

[Fig.4] A view schematically showing the inner ring;

[Fig.5] A graph showing a relation between the bearing friction and the bearing clearance after caulking;

[Fig.6] A longitudinal-section view of a second embodiment of a wheel bearing apparatus of the present invention;

[Fig.7] A longitudinal-section view of a third embodiment of a wheel bearing apparatus of the present invention;

[Fig.8] A longitudinal-section view of a wheel bearing apparatus of the prior art;

[Fig.9] An partially enlarged view of Fig. 8; and

[Fig.10] A graph showing a relation between the bearing friction and the bearing clearance after caulking.

Preferable modes for carrying out the invention

A preferable mode for carrying out the present invention is a wheel bearing apparatus comprising an outer member integrally formed on its outer circumference with a body mounting flange and on its inner circumference with double row outer raceway surfaces; an inner member including a hub wheel and an inner ring, the hub wheel being integrally formed on its one end with a wheel mounting flange and on its outer circumference with one inner raceway surface opposing to one of the outer raceway surfaces and having a cylindrical portion axially extending from the inner raceway surface through a stepped portion, the inner ring being formed on its outer circumference respectively with the other inner raceway surface opposing to the other of the double row outer raceway surfaces; double row rolling elements rollably contained between the inner raceway surfaces of the inner member and the outer raceway surfaces of the outer member; seals mounted in annular openings formed between the outer member and the inner member and the inner ring being axially immovably secured on the hub wheel under a predetermined bearing preloaded state by a caulking portion formed by plastically deforming radially outward an end of the cylindrical portion of the hub wheel characterized in that a thickness of a smaller end surface of the inner ring is larger than a height of the stepped portion of the hub wheel; that a value obtained by dividing a dimensionless value of the area of the smaller end surface of the inner ring by a dimensionless value of the inner diameter of the inner ring is set to 11 or more; and that the axial position of the smaller end surface of the inner ring is set within an axial range between the axial position of the outermost-side point of the inner-side rolling elements of the double row rolling elements and the axial position of the groove bottom point of the inner raceway surface of the inner ring.

First Embodiment

Preferable embodiments of the present invention will be described with reference to the accompanied drawings.

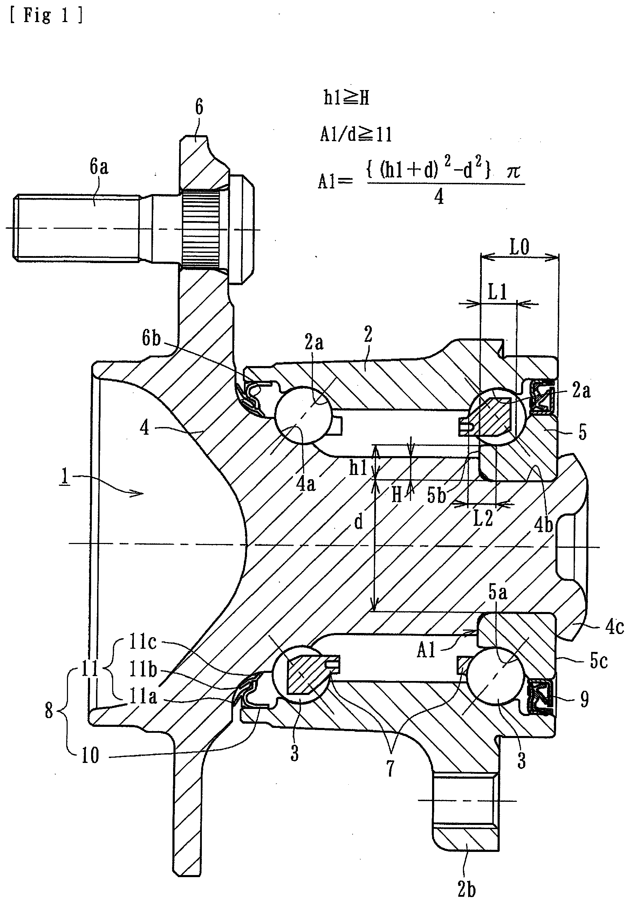

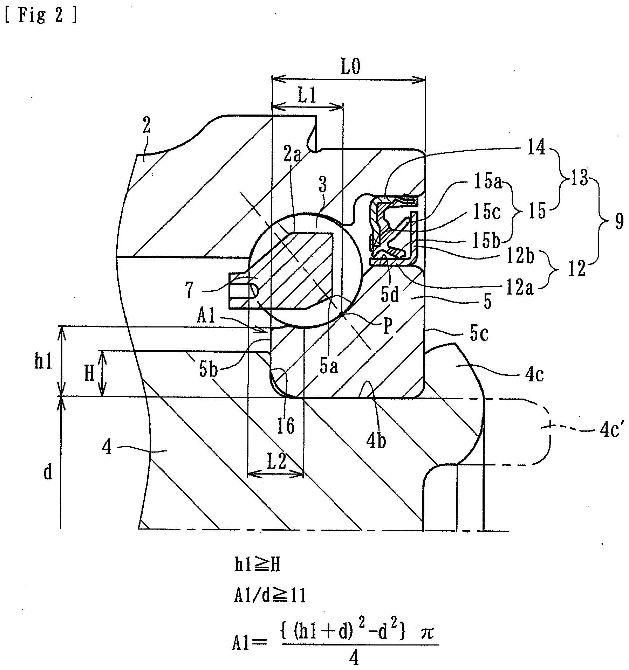

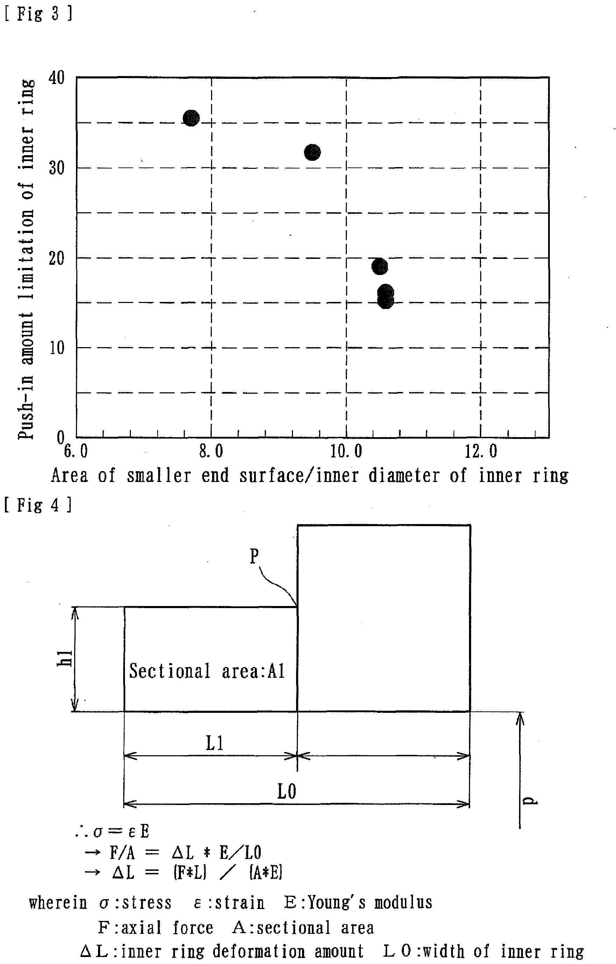

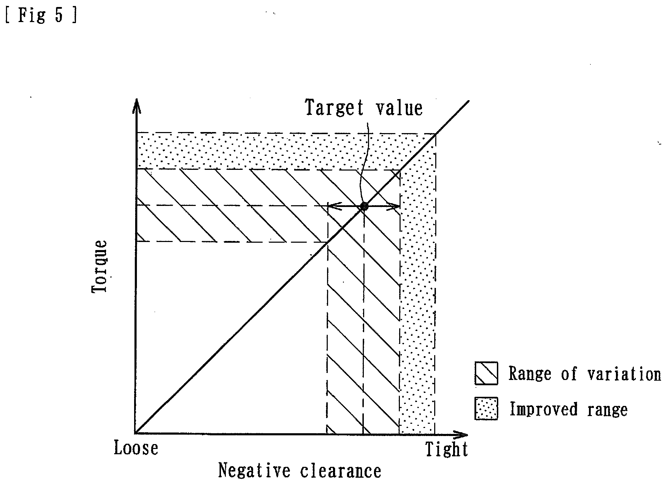

Fig.1 is a longitudinal-section view of a first embodiment of a wheel bearing apparatus of the present invention, Fig. 2 is a partially enlarged view of Fig. 1, Fig.3 is a graph showing a relation between a ratio of an abutting area of a smaller end surface/an inner diameter of the inner ring and a push-in amount limitation of the inner ring, Fig.4 is a view schematically showing the inner ring, and Fig.5 is a graph showing a relation between the bearing friction and the bearing clearance after caulking. In the description below, an outer-side of the wheel bearing apparatus when it is mounted on a vehicle is referred to as "outer-side" (a left side in a drawing), and an inner-side of the wheel bearing apparatus when it is mounted on a vehicle is referred to as "inner side" (a right side in a drawing).

The wheel bearing apparatus of the present invention is a so-called "third generation" type for a driven wheel and comprises an inner member 1, an outer member 2, and double row rolling elements (balls) 3,3 rollably contained between the inner member 1 and the outer member 2. The inner member 1 includes a hub wheel 4 and an inner ring 5 press-fitted onto the hub wheel 4 via a predetermined interference.

The hub wheel 4 is integrally formed, on its outer-side end, with a wheel mount flange 6 for mounting a wheel (not shown), and hub bolts 6a are secured on the wheel mounting flange 6 at its circumferentially equidistant positions. In addition, the hub wheel 4 is formed, on its outer circumference, with one (outer-side) inner raceway surface 4a of a circular-arc longitudinal-section and has a cylindrical portion 4b axially extending from the inner raceway surface 4a.

The inner ring 5 is formed, on its outer circumference, with the other (inner-side) inner raceway surface 5a of a circular-arc longitudinal-section. The inner ring 5 is press-fitted onto the cylindrical portion 4b via a predetermined interference to form a double row angular contact ball bearing of a back-to-back duplex type and axially immovably secured on the hub wheel 4 by a caulking portion 4c formed by plastically deforming the end of the cylindrical portion 4b radially outward. This makes it possible to reduce the weight and size of the wheel bearing apparatus. The inner ring 5 and the balls 3, 3 are formed of high carbon chrome steel such as SUJ2 and dipping hardened to their cores as having hardness of 58-64 HRC.

The hub wheel 4 is formed of medium-high carbon steel such as S53C including carbon of 0.40-0.80% by weight and is hardened by high frequency induction hardening as having a surface hardness of 58-64 HRC over a region from an inner-side base 6b of the wheel mounting flange 6 forming a seal-land portion for a seal 8 to the cylindrical portion 4b. The caulking portion 4c is not hardened and kept to hardness after forging. This makes it possible to apply sufficient mechanical strength against the rotary bending the wheel mounting flange 6, improve the anti-fretting property and perform the caulking process of the caulking portion 4c without causing generation of any micro cracks.

The outer member 2 is formed, on its outer circumference, with body mount flange 2b adapted to be mounted on a knuckle (not shown) and also on its inner circumference, with double row outer raceway surfaces 2a, 2a corresponding to the inner raceway surfaces 4a, 5a of the inner member 1. The balls 3, 3 are rollably contained between these outer and inner raceway surfaces 2a, 2a and 4a, 5a and held therein by cages 7, 7.

Similarly to the hub wheel 4, the outer member 2 is formed of medium-high carbon steel such as S53C including carbon of 0.40-0.80% by weight and at least the double row outer raceway surfaces 2a, 2a are hardened by high frequency induction hardening as having a surface hardness of 58-64 HRC. Seals 8, 9 are mounted in annular openings formed between ends of the outer member 2 and the inner member 1 to prevent leakage of lubricating grease sealed within the bearing and entering of rain water or dust from the outside into the bearing.

The outer-side seal 9 is formed as an integrated seal comprising a core metal 10 press-fitted into the outer-side end of the outer member 2 via a predetermined interface and a sealing member 11 adhered to the core metal 10 by vulcanizing adhesion. The core metal 10 is press-formed of austenitic stainless steel sheet (JIS SUS 304 etc.) or cold rolled steel sheet (JIS SPCC etc.) as having a substantially L-shaped longitudinal section.

On the other hand, the sealing member 11 is formed of synthetic rubber such as NBR (acrylonitrile-butadiene rubber) and comprises a side lip 11a and a dust lip 11b inclined radially outward and slide-contacting with the inner-side base 6b having a circular arc section of the wheel mounting flange 6 via a predetermined axial interference, and a grease lip 11c slide-contacting with the base 6b via a predetermined interference.

There are materials forming the sealing member 11 other than NBR, for example, HNBR (hydrogenation acrylonitrile-butadiene rubber), EPDM (ethylene propylene rubber) etc. superior in heat, and ACM (polyacrylic rubber), FKM (fluororubber), silicone rubber etc. superior in chemical resistance.

On the other hand, the inner-side seal 9 is formed as so-called a pack seal comprising a slinger 12 and a sealing plate 13 oppositely arranged as shown in Fig. 2. The slinger 12 is formed of a steel plate such as ferritic stainless steel sheet (JIS SUS 430 etc.) or preserved cold rolled steel sheet (JIS SPCC etc.) by press working as having a substantially L-shaped section comprising a cylindrical portion 12a to be press-fitted onto the outer circumference 5d of the inner ring 5 and a standing portion 12b extending radially outward from the cylindrical portion 12a.

On the other hand, the sealing plate 13 comprises a core metal 14 to be fitted into the end of the outer member 2 and a sealing member 15 integrally adhered to the core metal 14 by vulcanizing adhesion. The core metal 14 is press-formed of austenitic stainless steel sheet or preserved cold rolled steel sheet as having a substantially L-shaped longitudinal section.

The sealing member 15 is formed of synthetic rubber such as NBR etc. and comprises a side lip 15a extending radially outward in inclined manner and bifurcated dust lip 15b and grease lip 15c positioned radially inward from the side lip 15a. The side lip 15a slide-contacts with an outer-side surface of the standing portion 12b of the slinger 12 via a predetermined axial interface, and the dust lip 15b and the grease lip 15c slide-contact with the cylindrical portion 12a via a predetermined radial interface. The sealing member 15 may be formed by any material other than NBR, for example by HNBR (hydrogenation acrylonitrile-butadiene rubber), EPDM (ethylene propylene rubber) etc. superior in heat, and ACM (poly-acrylic rubber), FKM (fluororubber), silicone rubber etc. superior in chemical resistance.

Although it is shown herein the wheel bearing apparatus formed by a double row angular contact ball bearing using balls as rolling elements 3, the present invention is not limited to such a bearing and may be a double row tapered roller bearing using tapered rollers as rolling elements.

In the wheel bearing apparatus of this caulking type, it has been found that the bearing clearance after caulking is reduced as compared with the bearing clearance before caulking due to elastic deformation of the inner ring 5 caused by the caulking. However, with respect to the variation of clearance (i.e. range of variation of clearance), it is usually increased. For example, when the variation of clearance before caulking is 20μm, the variation of clearance after caulking would not be wholly shifted by caulking and would be increased to 40μm. It is supposed that this will be increase due to the variation of the elastic deformation of the inner ring 5.

The applicant has noticed that reduction of the bearing friction could be achieved by suppressing the bearing clearance after caulking with reducing the variation of the elastic deformation of the inner ring i.e. with reducing the sensitivity of elastic deformation of the inner ring.

The inner ring 5 is axially immovably secured on the cylindrical portion 4b of the hub wheel 4 under a state in which a predetermined bearing preload is applied firstly by press-fitting the inner ring 5 onto the cylindrical portion 5b until the smaller end surface 5b is abutted against the shoulder 16 of the hub wheel 4, and then by plastically deforming the end 4c' of the circular cylindrical portion 4b radially outward using a caulking jig (caulking punch) closely contacted with the larger end surface 5c to axially and elastically deforming (compressing) the inner ring 5 and to form the caulked portion 4c.

The variation (range) of bearing clearance after caulking is a total of a variation of initial clearance before caulking and a variation of clearance reduction due to caulking. The applicant has noticed that a portion of the inner ring 5 from a contact point P (hereinafter referred to as "touch position P") between the inner raceway surface 5a and the balls 3 to the outer side portion of the inner ring 5 will give so much influence to the variation of clearance reduction due to caulking and thus the thickness of the smaller end surface 5b of the inner ring 5 is set large.

More particularly, the thickness h1 of the smaller end surface 5b of the inner ring 5 is larger than the height H of the stepped portion 16 of the hub wheel 4 (h1≧H), the distance L1 from the touch position P of the inner ring 5 to the smaller end surface 5b is set small, and a ratio of the area A1 of the smaller end surface 5b of the inner ring 5 for the inner diameter d of the inner ring 5, more particularly a value obtained by dividing a dimensionless value of the area of the smaller end surface 5b of the inner ring 5 by a dimensionless value of the inner diameter d of the inner ring 5 is set to 11 or more (A1/d≧11). In addition, the axial position of the smaller end surface 5b of the inner ring 5 is set within an axial range L2 between the axial position of the outermost-side point of the inner-side rolling elements 3 of the double row rolling elements 3, 3 and the axial position of the groove bottom point of the inner raceway surface 5a of the inner ring 5. This makes it possible to reduce the bearing friction by reducing the sensitivity of the elastic deformation of the inner ring 5 during caulking process and by suppressing variation of the negative clearance after caulking.

As can be seen from the relation between a ratio of the area A1 of a smaller end surface 5b of the inner ring 5 (A1/d) and a push-in amount limitation of the inner ring 5 shown in Fig. 3 and verified by the applicant, the sensitivity of the elastic deformation of the inner ring 5 tends to be reduced if a ratio of a dimensionless value of the area A1 of the smaller end surface 5b of the inner ring 5 for a dimensionless value of the inner diameter d of the inner ring 5 is set to 11 or more (A1/d≧11). That is, when considering a schematically shown inner ring of Fig. 4, an outer-side portion L1 of the inner ring from the touch position Pl gives large influence to change of the bearing clearance when the inner ring 5 is axially compressed by caulking.

The deformation amount of the inner ring 5 when a certain load is applied to the inner ring 5 can be obtained from a formula below;

Since $\sigma = \varepsilon E$, it can be expressed as $F/\Delta L \times E/L0$, and thus $\Delta L = (F \times L0)/(A \times E)$ wherein $\sigma$: stress, $\varepsilon$: strain, E; Young's modulus, F: axial force, A: sectional area of inner ring, $\Delta L$: deformation amount of inner ring, and L0: width of inner ring. When applying this to Fig. 4, the deformation of the inner ring 5 relating to the clearance reduction can be expressed as $(FL1)/(A1 \times E)$, wherein

$$A1 = \{(h1+d)^2 - d^2\}\pi/4$$

Considering that the load (axial force F) is constant and the Yong's modulus E is same because of using same material, it can be understood from the formula above that the deformation of the inner ring 5 will become small when L1 is small and A1 is large (the thickness of the smaller end 5b is large). That is, the sensitivity of elastic deformation due to caulking can be suppressed low.

The longitudinal section of the inner ring 5 is substantially square and thus the smaller the width of the smaller end 5b of the inner ring 5, the lower the sensitivity of elastic deformation of the inner ring. However, if setting the position of the smaller end 5b of the inner ring 5 at an inner position than an axial position corresponding to the groove bottom position of the inner raceway surface 5a of the inner ring 5, the balls 3 would roll on the end of the inner raceway surface 5a and cause generation of noise or fatigue ablation. On the other hand, if setting the position of the smaller end 5b of the inner ring within an axial range L2 between the axial position of the outermost-side point of the inner-side rolling elements 3 of the double row rolling elements 3, 3 and the axial position of the groove bottom point of the inner raceway surface 5a of the inner ring 5, it is possible to reduce the sensitivity of the elastic deformation of the inner ring 5 and to reduce the manufacturing cost with reducing the weight and size as well as grinding process range of the inner ring 5 and the hub wheel 4.

In other words, it is possible to totally reduce the bearing friction by totally reducing the range of variation (shown by hatchings) with assigning the reduced part of variation range to reduction of variation of tight clearance side after caulking.

Second Embodiment

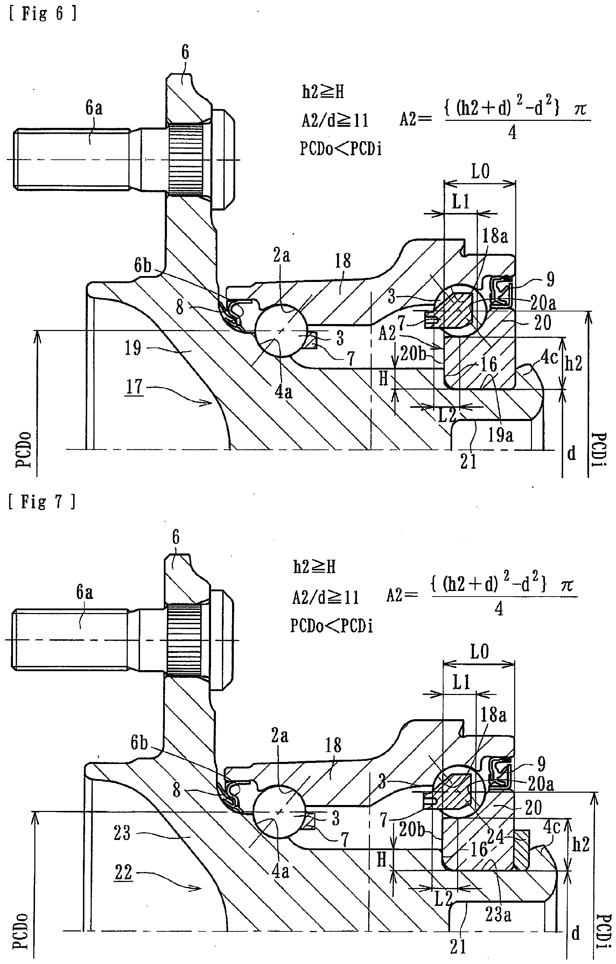

Fig. 6 is a longitudinal-sectional view of a second embodiment of a wheel bearing apparatus of the present invention. This embodiment is different from the first embodiment (Figs. 1 and 2) basically in difference of pitch circle diameters of the inner-side and outer-side rolling elements (balls) and accordingly same reference numerals are used for designating the same structural elements of the previous embodiment and detailed description of them will be omitted.

This wheel bearing apparatus of the second embodiment is also a so-called "third generation" type for a driven wheel and comprises an inner member 17, an outer member 18, and double row rolling elements (balls) 3, 3 rollably contained between the inner member 17 and the outer member 18. The inner member 17 includes a hub wheel 19 and an inner ring 20 press-fitted onto the hub wheel 19 via a predetermined interference.

The hub wheel 19 is integrally formed, on its outer-side end, with the wheel mount flange 6 for mounting a wheel (not shown), and is formed, on its outer circumference, with one (outer-side) inner raceway surface 4a of a circular-arc longitudinal-section and has a cylindrical portion 19a axially extending from the inner raceway surface 4a. The inner ring 20 is formed, on its outer circumference, with the other (inner-side) inner raceway surface 20a of a circular-arc longitudinal-section. The inner ring 20 is press-fitted onto the cylindrical portion 19a of the hub wheel 19 via a predetermined interference and axially immovably secured on the hub wheel 19 by a caulking portion 4c formed by plastically deforming the end of the cylindrical portion 19a radially outward.

The hub wheel 19 is formed of medium-high carbon steel such as S53C including carbon of 0.40-0.80% by weight and is hardened by high frequency induction hardening as having a surface hardness of 58-64 HRC over a region from an inner-side base 6b of the wheel mounting flange 6 to the cylindrical portion 19a. The inner ring 20 is formed of high carbon chrome steel such as SUJ2 and dipping hardened to its core as having hardness of 58-64 HRC.

The outer member 18 is formed, on its outer circumference, with body mount flange (not shown) and also on its inner circumference, with double row outer raceway surfaces 2a, 18a. The outer member 18 is formed of medium-high carbon steel such as S53C including carbon of 0.40-0.80% by weight and at least the double row outer raceway surfaces 2a, 18a are hardened by high frequency induction hardening as having a surface hardness of 58-64 HRC.

In this embodiment, the pitch circle diameter PCDi of the inner-side rolling elements 3 is set larger than the pitch circle diameter PCDo of the outer-side rolling elements 3 (PCDi>PCDo). Each of the inner-side and outer-side rolling elements has a same size (diameter). However, Due to the difference of the pitch circle diameters PCDi, PCDo, the number of the inner-side row of rolling elements 3 is set larger than the number of the outer-side row of rolling elements 3.

Such a structure in which the pitch circle diameter PCDi of the inner-side rolling elements 3 is set larger than the pitch circle diameter PCDo of the outer-side rolling elements 3 (PCDi>PCDo) as well as the number of the inner-side rolling elements 3 is set larger than the number of the outer-side rolling elements 3 makes it possible to increase the bearing rigidity of the inner-side as compared with that of the outer-side and thus to extend the life of bearing and to prevent the roundness of the inner raceway surface 20a from being lowered with suppressing deformation of the inner ring 20 which would be caused by the caulking process.

As a consequence of making the pitch circle diameter PCDi of the inner-side rolling elements 3 larger than the pitch circle diameter PCDo of the outer-side rolling elements 3, the thickness of the inner ring 20 is set large. Similarly to the first embodiment, the thickness h2 of the smaller end 20b of the inner ring 20 is set larger than the height H of the stepped portion 16 of hub wheel 19 (h2≧H), the distance L1 from the touch position P to the smatter end surface 20b is set small, and a value obtained by dividing a dimensionless value of the area A2 of the smaller end surface 20b of the inner ring 20 by a dimensionless value of the inner diameter d of the inner ring 5 is set to 11 or more (A2/d≧11). In addition, the axial position of the smaller end surface 20b of the inner ring 20 is set within an axial range L2 between the axial position of the outermost-side point of the inner-side rolling elements 3 of the double row rolling elements 3 and 3 and the axial position of the groove bottom point of the inner raceway surface 20a of the inner ring 20.

This makes it possible to reduce the bearing friction by reducing the sensitivity of the elastic deformation of the inner ring 20 during caulking process and by suppressing variation of the negative clearance after caulking and also to suppress the hoop stress of the inner ring 22 caused by the caulking process.

In addition according to the present invention, a recessed portion 21 is formed on the inner-side end of the hub wheel 19, the depth of the recessed portion 21 extends to the axial position of the stepped portion 16 of the hub wheel 19, and the cylindrical portion 19a has a circular cross-section. This makes it possible to reduce the hoop stress of the inner ring 20 with the weight of the hub wheel 19 being reduced, expansion of the inner ring 20 by caulking being suppressed, and the thickness of the inner ring 20 being increased.

### Third embodiment

Fig. 7 is a longitudinal-sectional view of a third embodiment of a wheel bearing apparatus of the present invention. This embodiment is different from the second embodiment (Fig. 6) basically in provision of a spacer between the inner ring and the caulking portion and accordingly same reference numerals are used for designating the same structural elements of the previous embodiment and detailed description of them will be omitted.

This wheel bearing apparatus of the third embodiment is also a so-called "third generation" type for a driven wheel and comprises an inner member 22, the outer member 18, and double row rolling elements (balls) 3, 3 rollably contained between the inner member 22 and the outer member 18. The inner member 22 includes a hub wheel 23 and the inner ring 20 press-fitted onto the hub wheel 23 via a predetermined interference.

The hub wheel 23 is integrally formed, on its outer-side end, with the wheel mount flange 6 and is formed, on its outer circumference, with one (outer-side) inner raceway surface 4a of a circular-arc longitudinal-section and has a cylindrical portion 23a axially extending from the inner raceway surface 4a. The inner ring 20 is press-fitted onto the cylindrical portion 23a of the hub wheel 23 via a predetermined interference and axially immovably secured on the hub wheel 23 by the caulking portion 4c formed by plastically deforming the end of the cylindrical portion 23a radially outward.

The hub wheel 23 is formed of medium-high carbon steel such as S53C including carbon of 0.40-0.80% by weight and is hardened by high frequency induction hardening as having a surface hardness of 58-64 HRC over a region from the inner-side base 6b of the wheel mounting flange 6 to the cylindrical portion 23a including the outer-side inner raceway surface 4a.

According to this embodiment, the spacer 24 having a rectangular longitudinal section is disposed on the cylindrical portion 23a of the hub wheel 23 so that the inner ring 20 is secured on the hub wheel 23 with the inner ring 20 and the spacer 24 being sandwiched between the caulking portion 4c and the stepped portion 16 of the hub wheel 23. The spacer 24 is formed of steel-based metallic material such as carbon steel S40C including carbon of 0.37-0.43% by weight and hardened by high frequency induction hardening as having a surface hardness of 40-50 HRC. This makes it possible to improve the durability of the inner ring 20 with reducing the deformation and therefore hoop stress of the inner ring 20 and to maintain the bearing preload at a proper value.

### Applicability in Industry

The present invention can be applied to the third generation wheel bearing apparatus of the caulking type in which the inner ring is press-fitted onto the cylindrical portion of the hub wheel and the inner ring is secured thereto by caulking.

### Description of Reference numerals

| | |
|---|---|
| 1,17, 22 | inner member |
| 2, 18 | outer member |
| 2a, 18a | outer raceway surface |
| 2b | body mounting flange |
| 3 | rolling element |
| 4, 19, 23 | hub wheel |
| 4a, 5a, 20a | inner raceway surface |
| 4b, 19a, 23a | cylindrical portion |
| 4c | caulking portion |
| 4c' | end portion of cylindrical portion |
| 5, 20 | inner ring |
| 5b, 20b | smaller end (surface) of inner ring |
| 5c | larger end (surface) of inner ring |
| 6 | wheel mounting flange |
| 6a | hub bolt |
| 6b | inner-side base of wheel mounting flange |
| 7 | cage |
| 8 | outer-side seal |
| 9 | inner-side seal |
| 10,14 | core metal |
| 11,15 | sealing member |
| 11a, 15a | side lip |

| | |
|---|---|
| 11b, 15b | dust lip |
| 11c, 15c | grease lip |
| 12 | slinger |
| 12a | cylindrical portion |
| 12b | standing portion |
| 13 | sealing plate |
| 16 | stepped portion of hub wheel |
| 21 | recessed portion |
| 24 | spacer |
| 50 | wheel bearing apparatus |
| 51 | inner member |
| 52 | hub wheel |
| 52a, 53a | inner raceway surface |
| 52b | cylindrical portion |
| 52c | caulking portion |
| 53 | inner ring |
| 53b | larger end (surface) of inner ring |
| 53c | smaller end (surface) of inner ring |
| 54 | wheel mounting flange |
| 55 | bolt aperture |
| 55a | base portion |
| 56 | ball |
| 57 | cage |
| 58, 59 | seal |
| 60 | outer member |
| 60a | outer raceway surface |
| 61 | stepped portion |
| 62 | recessed portion |
| A | sectional area of inner ring |
| A1, A2 | area of smaller end surface of inner ring |
| d | inner diameter of inner ring |
| E | Young's modulus |
| F | axial force |
| h1, h2 | thickness of smaller end of inner ring |
| H | stepped portion of hub wheel |
| L0 | width of inner ring |
| L1 | distance from touch position to smaller end surface of inner ring |
| L2 | axial range between the axial position of the outermost-side point of the inner-side rolling elements and the axial position of the groove bottom point of the inner raceway surface |
| $\Delta L$ | deformation amount of inner ring |
| P | touch position of inner ring |
| W | axial range of inner raceway surface |
| $\varepsilon$ | strain |
| $\sigma$ | stress |

**Claims**

1. A wheel bearing apparatus comprising:

   an outer member (2 or 18) integrally formed on its outer circumference with a body mounting flange (2b) and on its inner circumference with double row outer raceway surfaces (2a; 2a or 2a; 18a);
   an inner member (1, 17 or 22) including a hub wheel (4, 19 or 23) and an inner ring (5 or 20), the hub wheel (4, 19 or 23) being integrally formed on its one end with a wheel mounting flange (6) and on its outer circumference with one inner raceway surface (4a) opposing to one of the outer raceway surfaces (2a or 2a) and having a cylindrical portion (4b, 19a or 23a) axially extending from the inner raceway surface (4a) through a stepped portion (16), the inner ring (5 or 20) being formed on its outer circumference respectively with the other inner raceway surface (5a or 20a) opposing to the other of the double row outer raceway surfaces (2a or 18a);
   double row rolling elements (3 and 3) rollably contained between the inner raceway surfaces (4a; 5a or 4a; 20a) of the inner member (1, 17 or 22) and the outer raceway surfaces (2a; 2a or 2a; 18a) of the outer member (2 or 18); and
   the inner ring being axially immovably secured on the hub wheel (4, 19 or 23) by a caulking portion (4c) formed by plastically deforming radially outward an end of the cylindrical portion (4b, 19a or 23a) of the hub wheel (4, 19 or 23), and
   that the thickness (h1 or h2) of a smaller end surface (5b or 20b) of the inner ring (5 or 20) is larger than the height (H) of the stepped portion (16) of the hub wheel (4, 19 or 23);
   that the axial position of the smaller end surface (5b or 20b) of the inner ring (5 or 20) is set within an axial range (L2) between the axial position of the outermost-side point of the inner-side rolling elements (3) of the double row rolling elements (3 and 3) and the axial position of the groove bottom point of the inner raceway surface (5a or 20a) of the inner ring (5 or 20); and
   **characterised in that** a value obtained by dividing a dimensionless value of the area (A1 or A2) of the smaller end surface (5b or 20b) of the inner ring (5 or 20) by a dimensionless value of the inner diameter (d) of the inner ring (5 or 20) is set to 11 or more.

2. A wheel bearing apparatus of claim 1 wherein a recessed portion (21) is formed on the inner-side end of the hub wheel (19 or 23), the depth of the recessed portion (21) extends to the axial position of the stepped portion (16) of the hub wheel (19 or 23), and the cylindrical portion (19a or 23a) has a circular cross-section.

3. A wheel bearing apparatus of any one of claims 1 or 2 wherein a spacer (24) having a rectangular longitudinal section is disposed on the cylindrical portion (23a) of the hub wheel (23) so that the inner ring (20) is secured on the hub wheel (23) with the inner ring

(20) and the spacer (24) being sandwiched between the caulking portion (4c) and the stepped portion (16) of the hub wheel (23).

4. A wheel bearing apparatus of claim 1 wherein the pitch circle diameter (PCDi) of the inner-side rolling elements (3) of the double row rolling elements (3 and 3) is larger than the pitch circle diameter (PCDo) of the outer-side rolling elements (3) of the double row rolling elements (3 and 3), the size of each double row rolling element (3) is same, and the number of the inner-side rolling elements (3) is larger than that of the outer-side rolling elements (3).

**Patentansprüche**

1. Radlagervorrichtung, Folgendes umfassend:

ein äußeres Bauteil (2 oder 18), angeformt an seinem äußeren Umfang an einen Karosseriemontageflansch (2b), und an seinem inneren Umfang mit einer Doppelreihe von äußeren Laufbahnflächen (2a; 2a oder 2a; 18a);
ein inneres Bauteil (1, 17 oder 22) mit einer Radnabe (4, 19 oder 23) und einem Innenring (5 oder 20), wobei die Radnabe (4, 19 oder 23) an ihrem einen Ende mit einem Radmontageflansch (6) und an ihrem äußeren Umfang mit einer inneren Laufbahnfläche (4a), die einer der äußeren Laufbahnflächen (2a oder 2a) gegenüber liegt, einstückig ausgebildet ist und einen zylindrischen Abschnitt (4b, 19a oder 23a) hat, der sich axial von der inneren Laufbahnfläche (4a) über einen abgestuften Abschnitt (16) erstreckt, wobei der Innenring (5 oder 20) jeweils auf seinem äußeren Umfang mit der anderen inneren Laufbahnfläche (5a oder 20a), die der anderen der doppelreihigen äußeren Laufbahnfläche (2a oder 18a) gegenüber liegt, geformt ist;
doppelreihige Wälzkörper (3 und 3), die zwischen den inneren Laufbahnflächen (4a; 5a oder 4a; 20a) des inneren Bauteils (1, 17 oder 22) und den äußeren Laufbahnflächen (2a; 2a oder 2a; 18a) des äußeren Bauteils rollbar enthalten sind, wobei der Innenring axial unbeweglich an der Radnabe (4, 19 oder 23) durch ein Stemmteil (4c) gesichert ist, das durch eine radial nach außen gehende plastische Verformung eines Endes des zylindrischen Abschnitts (4b, 19a oder 23a) der Radnabe (4, 19 oder 23) gebildet wird, und wobei die Dicke (h1 oder h2) einer kleineren Endfläche (5b oder 20b) des Innenrings (5 oder 20) größer ist als die Höhe (H) des abgestuften Abschnitts (16) der Radnabe (4, 19 oder 23);
wobei die axiale Position der kleineren Endfläche (5b oder 20b) des Innenrings (5 oder 20) innerhalb eines Axialbereichs (L2) zwischen der axialen Position des am weitesten außen befindlichen seitlichen Punktes der innenseitigen Wälzelemente (3) der doppelreihigen Wälzelemente (3 und 3) und der axialen Position des Nutbodenpunktes der inneren Laufbahnfläche (5a oder 20a) des Innenrings (5 oder 20) festgelegt ist; und
**dadurch gekennzeichnet, dass**
ein Wert, der durch Dividieren eines dimensionslosen Wertes der Fläche (A1 oder A2) der kleineren Endfläche (5b oder 20b) des Innenrings (5 oder 20) durch einen dimensionslosen Wert des Innendurchmessers (d) des Innenrings (5 oder 20) erzielt wird, auf 11 oder höher festgelegt ist.

2. Radlagervorrichtung gemäß Anspruch 1, wobei ein vertiefter Abschnitt (21) am innenseitigen Ende der Radnabe (19 oder 23) geformt ist, wobei die Tiefe des vertieften Abschnitts (21) sich bis zur axialen Position des abgestuften Abschnitts (16) der Radnabe (19 oder 23) erstreckt und der zylindrische Abschnitt (19a oder 23a) einen kreisförmigen Querschnitt hat.

3. Radlagervorrichtung gemäß einem der Ansprüche 1 oder 2, wobei ein Abstandshalter (24) mit einem rechteckigen Längsprofil am zylindrischen Abschnitt (23a) der Radnabe (23) so angeordnet ist, dass der Innenring (20) an der Radnabe (23) gesichert ist, sodass der Innenring (20) und der Abstandshalter (24) zwischen dem Stemmteil (4c) und dem abgestuften Abschnitt (16) der Radnabe (23) eingeklemmt sind.

4. Radlagervorrichtung gemäß Anspruch 1, wobei der Wälzkreisdurchmesser (PCDi) der innenseitigen Wälzkörper (3) der doppelreihigen Wälzkörper (3 und 3) größer ist als der Wälzkreisdurchmesser (PCDo) der äußeren Wälzkörper (3) der doppelreihigen Wälzkörper (3 und 3), wobei die Größe jedes doppelreihigen Wälzkörpers (3) identisch ist und die Anzahl der innenseitigen Wälzkörper (3) höher ist als die der äußeren Wälzkörper (3).

**Revendications**

1. Dispositif de palier de roue comportant :

un élément extérieur (2 ou 18) formé d'un seul tenant sur sa circonférence extérieure avec une bride de montage de corps (2b) et sur sa circonférence intérieure avec des surfaces de chemin extérieur à double rangée (2a ; 2a ou 2a ; 18a) ;
un élément intérieur (1, 17 ou 22) comportant un moyeu de roue (4, 19 ou 23) et une bague intérieure (5 ou 20), le moyeu de roue (4, 19 ou 23) étant formé d'un seul tenant au niveau de son extrémité avec une bride de montage de roue (6) et sur sa circonférence extérieure avec une surface de chemin intérieur (4a) étant opposée à une des surfaces de chemin extérieur (2a ou 2b) et ayant une partie cylindrique (4a, 19a ou 23a) s'étendant axialement à partir de la surface de chemin intérieur (4a) à travers une partie étagée (16), la bague intérieure (5 ou 20) étant formée sur sa circonférence extérieure respectivement avec l'autre surface de chemin intérieur (5a ou 20a) étant opposée à l'autre des surfaces de chemin extérieur à double rangée (2a ou 18a) ;

des éléments roulants à double rangée (3 et 3) contenus en rotation entre les surfaces de chemin intérieur (4a ; 5a ou 4a ; 20a) de l'élément intérieur (1, 17 ou 22) et les surfaces de chemin extérieur (2a ; 2a ou 2a ; 18a) de l'élément extérieur (2 ou 18) ; et la bague intérieure étant fixée axialement de manière immobile sur le moyeu de roue (4, 19 ou 23) par une partie de matage (4c) formée par déformation plastique, radialement vers l'extérieur, d'une extrémité de la partie cylindrique (4b, 19a ou 23a) du moyeu de roue (4, 19 ou 23),

que l'épaisseur (hl ou h2) d'une surface d'extrémité plus petite (5a ou 20b) de la bague intérieure (5 ou 20) est plus large que la hauteur (H) de la partie étagée (16) du moyeu de roue (4, 19 ou 23) ;

que la position axiale de la surface d'extrémité plus petite (5b ou 20b) de la bague intérieure (5 ou 20) est fixée à l'intérieur d'une zone axiale (L2) entre la position axiale du point extrême extérieur des éléments roulants du côté intérieur (3) des éléments roulants à double rangée (3 et 3) et la position axiale du point inférieur de gorge de la surface de chemin intérieur (5a ou 20a) de la bague intérieure (5 ou 20) ; et

**caractérisé en ce que**

une valeur obtenue en divisant une valeur adimensionnelle de la superficie (A1 ou A2) de la surface d'extrémité plus petite (5b ou 20b) de la bague intérieure (5 ou 20) par une valeur adimensionnelle du diamètre intérieur (d) de la bague intérieure (5 ou 20) est fixée à 11 ou plus.

2. Dispositif de palier de roue selon la revendication 1, dans lequel une partie évidée (21) est formée sur l'extrémité côté intérieur du moyeu de roue (19 ou 23), la profondeur de la partie évidée (21) s'étend à la position axiale de la partie étagée (16) du moyeu de roue (19 ou 23), et la partie cylindrique (19a ou 23a) présente une section transversale circulaire.

3. Dispositif de palier de roue selon l'une des revendications 1 ou 2, dans lequel un écarteur (24) ayant une section longitudinale rectangulaire est agencé sur la partie cylindrique (23a) du moyeu de roue (23) de sorte que la bague intérieure (20) est fixée sur le moyeu de roue (23) avec la bague intérieure (20) et que l'écarteur (24) est intercalé entre la partie de matage (4c) et la partie étagée (16) du moyeu de roue (23).

4. Dispositif de palier de roue selon la revendication 1, dans lequel le diamètre du cercle primitif (PCDi) des éléments roulants côté intérieur (3) des éléments roulants à double rangée (3 et 3) est plus large que le diamètre du cercle primitif (PCDo) des éléments roulants côté extérieur (3) des éléments roulants à double rangée (3 et 3), la dimension de chaque élément roulant à double rangée (3) est la même, et le nombre des éléments roulants côté intérieur (3) est plus élevé que celui des éléments roulants côté extérieur (3).

[ Fig 1 ]

$$h1 \geqq H$$

$$A1/d \geqq 11$$

$$A1 = \frac{\{(h1+d)^2 - d^2\}\,\pi}{4}$$

[ Fig 2 ]

$$h1 \geqq H$$

$$A1/d \geqq 11$$

$$A1 = \frac{\{(h1+d)^2 - d^2\} \; \pi}{4}$$

[ Fig 3 ]

[ Fig 4 ]

$$\therefore \sigma = \varepsilon E$$
$$\rightarrow F/A = \Delta L * E/L0$$
$$\rightarrow \Delta L = (F*L) / (A*E)$$

wherein $\sigma$ :stress   $\varepsilon$ :strain   E :Young's modulus
        F :axial force   A :sectional area
        $\Delta L$ :inner ring deformation amount   L 0 :width of inner ring

[ Fig 5 ]

Range of variation

Improved range

[ Fig 6 ]

$$h2 \geqq H$$
$$A2/d \geqq 11 \qquad A2 = \frac{\{(h2+d)^2 - d^2\}\, \pi}{4}$$
$$PCDo < PCDi$$

[ Fig 7 ]

$$h2 \geqq H$$
$$A2/d \geqq 11 \qquad A2 = \frac{\{(h2+d)^2 - d^2\}\, \pi}{4}$$
$$PCDo < PCDi$$

[ Fig 8 ]

[ Fig 9 ]

[ Fig 10 ]

Range of variation

**EP 2 944 837 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009116779 A1
- JP 2008019899 A